# FASCICULE DE BREVET EUROPEEN

(11) **EP 2 198 193 B1**
(45) Date de publication et mention de la délivrance du brevet: **26.08.2015**
(21) Numéro de dépôt: 08840976.8
(22) Date de dépôt: 07.10.2008
(51) Int. Cl.: F16L 21/08, F16L 21/06

(54) **SEGMENT A GRIFFES POUR COLLIER A GRIFFES ET COLLIER DE SERRAGE CORRESPONDANT**
GREIFERSEGMENT FÜR EINEN GREIFRING UND ENTSPRECHENDER KLEMMRING
CLAW SEGMENT FOR A CLAW COLLAR AND CORRESPONDING CLAMPING COLLAR

(30) Priorité: 08.10.2007 FR 0758139
(43) Date de publication de la demande: 23.06.2010
(73) Titulaire: Saint-Gobain PAM, 21 Avenue Camille Cavallier 54700 Pont-à-Mousson (FR)
(72) Inventeur: FRANCOIS-BRAZIER, Joël, F-54700 Pont-a-Mousson (FR); RENARD, Serge, F-54700 Montauville (FR)
(74) Mandataire: Jacobson, Claude
(86) Numéro de dépôt international: PCT/FR2008/051809
(87) Numéro de publication internationale: WO 2009/053603

(56) Documents cités:
- EP-A- 1 245 889
- EP-A- 1 788 291
- DE-C1- 3 710 852
- DE-C1- 19 802 676
- US-A1- 2007 126 234

## Description

La présente invention concerne un collier de serrage, du type indiqué dans le préambule de la revendication 1.

Un tel collier de serrage est connu de DE19802676.

L'invention s'applique aux colliers à griffes destinés à verrouiller des liaisons tubulaires.

On connaît dans l'état de la technique des colliers à griffes utilisés pour verrouiller des liaisons étanches entre deux tuyaux à bouts unis.

Ces colliers à griffes comprennent des segments à griffes adaptés pour mordre dans la surface extérieure des bouts unis.

Les segments sont munis d'une pluralité de griffes, griffes dont les extrémités en contact avec le bout unis sont parfois de forme pointue, telle qu'une forme en V, parfois de forme rectangulaire.

D'une part, ces segments ont une tenue en pression qui peut être limitée en raison du compromis à trouver entre la taille de la surface de contact de la dent sur le bout uni et donc l'efficacité de la pénétration de la dent dans le bout uni, et la résistance intrinsèque de la dent.

D'autre part, ces segments à griffes présentant majoritairement des angles et des arêtes vives lorsqu'ils sont très sollicités peuvent présenter des amorces de rupture, et sont parfois dangereux à manipuler car coupants.

Enfin, ces segments à griffes sont difficiles à fabriquer étant donné que la pointe de chaque griffe nécessite souvent des découpes ou des usinages complexes relevant d'outillages eux-mêmes fragiles en raison des angles souhaités au final sur les pièces.

L'invention a pour but de proposer un segment à griffes non dangereux à manipuler qui peut être fabriqué d'une manière économique et qui permet d'obtenir de bonnes performances au niveau de la tenue du collier à griffes.

A cet effet, l'invention a pour objet un collier de serrage du type précité, caractérisé par les caractéristiques de la revendication 1.

Selon des modes particuliers de réalisation, le collier de serrage comporte l'une ou plusieurs des caractéristiques indiquées dans les revendications 2 à 9.

L'invention sera mieux comprise à la lecture de la description qui va suivre, donnée uniquement à titre d'exemple et faite en se référant aux dessins annexés, sur lesquels :
- la Figure 1 est une vue en perspective d'un collier à griffes selon l'invention ;
- la Figure 2 est une vue axiale d'un segment à griffes du collier de la figure 1 ; et
- la Figure 3 est une vue en coupe selon le plan radial III-III de la Figure 2.

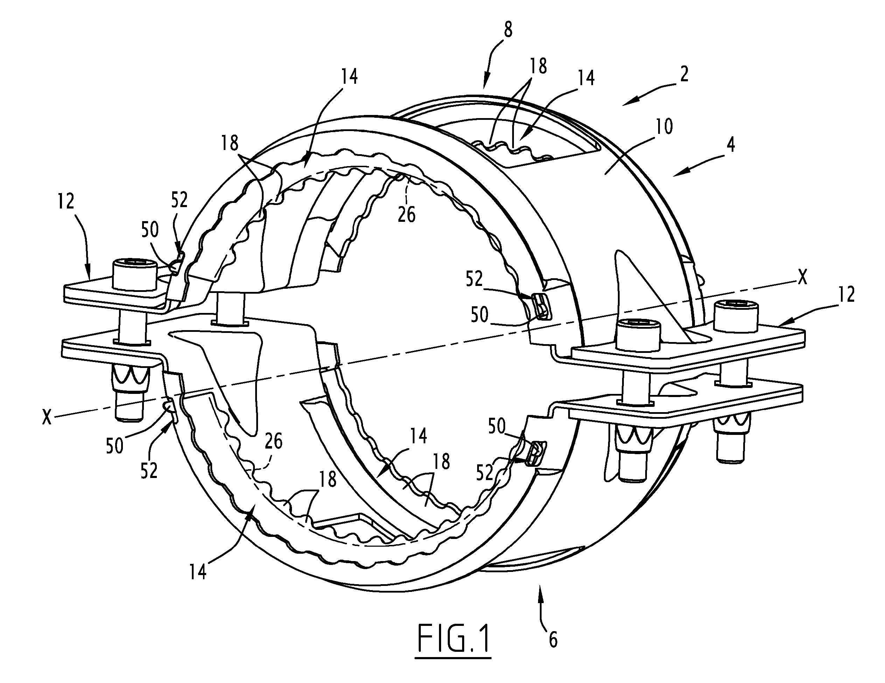

Sur la Figure 1 est représenté en perspective un collier à griffes selon l'invention, désigné par la référence générale 2.

Ce collier à griffes 2 est adapté pour verrouiller l'un par rapport à l'autre deux bouts unis non représentés, et pour empêcher une séparation axiale des deux bouts unis lorsqu'un fluide sous pression se situe dans ceux-ci.

Le collier à griffes 2 s'étend autour d'un axe central X-X. Dans ce qui suit, les expressions « axialement », « radialement » et « circonférentiellement » seront utilisées par rapport à cet axe central X-X.

Le collier à griffes 2 comporte un premier ensemble 4 pour collier à griffes et un deuxième ensemble 6 pour collier à griffes. Le premier ensemble 4 et le deuxième ensemble 6 sont, hormis les moyens de serrage, identiques. En conséquence, dans ce qui suit uniquement le premier ensemble 4 sera décrit.

L'ensemble 4 pour collier à griffes comprend un corps de base 8 ou une demi-cage qui comporte une partie centrale 10 et deux brides de fixation 12. Le corps de base 8 s'étend autour de l'axe central X-X sur une plage angulaire inférieure à 180°pour garantir le serrage des deux bouts unis.

L'ensemble 4 est en outre muni de deux segments à griffes 14 dont un est disposé de chaque côté axial du corps de base 8.

Chaque segment à griffes 14 s'étend autour de l'axe central X-X autour d'une plage angulaire inférieure à la plage angulaire du corps de base 8.

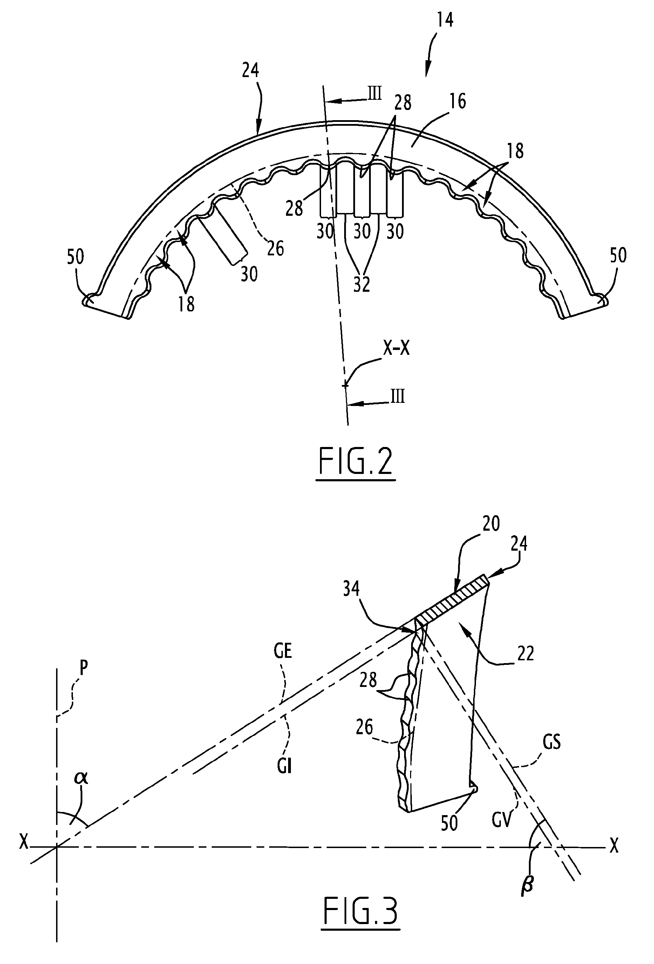

Le segment à griffes 14 est représenté plus en détail sur la Figure 2.

Le segment à griffes 14 comporte un corps de segment 16 et une pluralité de griffes 18 disposées sur une partie radialement intérieure du corps de segment 16.

Les griffes 18 sont adaptées pour s'accrocher sur la surface extérieure d'un bout uni.

Le corps de segment 16 a une forme générale de tronc de cône et délimite une surface extérieure 20 tronconique et une surface intérieure 22 tronconique (voir Figure 3). Les deux surfaces extérieure 20 et intérieure 22 sont parallèles l'une par rapport à l'autre.

La surface extérieure 20 est délimitée par une génératrice extérieure GE et la surface intérieure 22 est délimitée par une génératrice intérieure GI. Chacune des génératrices GE et GI est oblique par rapport à l'axe X-X et est inclinée d'un premier angle α par rapport à un plan P perpendiculaire à cet axe. A l'état libre du collier de serrage et donc du segment, l'angle α est par exemple et de préférence compris entre 30°et 50°.

Les génératrices GE et GI sont des génératrices de surfaces enveloppantes du segment à griffes 14.

Le corps de segment 16 délimite un bord radialement extérieur 24 lisse ainsi qu'un bord radialement intérieur 26 sur lequel sont présentes les griffes 18.

Le bord extérieur 24 est délimité par une surface qui est inclinée de 90° par rapport aux surfaces extérieure 20 et intérieure 22.

Le bord intérieur 26 est indiqué en traits interrompus sur les figures, étant donné que le corps de segment 16 et les griffes 18 sont fabriqués d'un seul tenant. Comme ceci est visible sur la Figure 1, les bords intérieurs 26 des deux segments à griffes 14 sont dirigés axialement l'un vers l'autre.

En se référant de nouveau aux Figures 2 et 3, chaque griffe 18 a un sommet 28, qui est l'extrémité radialement intérieure de la griffe 18. Ce sommet 28 vient en premier lieu en contact avec la surface du bout uni lors du serrage.

Chaque griffe 18 délimite un domaine de sommet 30 s'étendant circonférentiellement de part et d'autre du sommet 28. Le domaine de sommet 30 a un profil convexe qui est incurvé de manière continue sur toute son étendue circonférentielle. Le profil est vu selon une direction perpendiculaire à la surface extérieure 20 (ou bien le déroulement du segment 14 sur une surface plane).

De préférence, le profil du domaine de sommet 30 a une forme d'arc de cercle ou une forme sinusoïdale.

Deux domaines de sommet 30 adjacents sont séparés par un domaine de vallée 32 ayant un profil concave. Le profil de chaque domaine de vallée 32 est également incurvé de manière continue sur toute l'étendue circonférentielle du domaine de vallée 32. Par exemple, le profil du domaine de vallée 32 a une forme en arc de cercle ou a une forme sinusoïdale. Le profil du domaine de vallée 32 est également vu selon une direction perpendiculaire à la surface extérieure 20 ou le déroulement du segment 14 sur une surface plane.

Avantageusement, les profils du domaine de vallée 32 et des domaines de sommet 30 adjacents se rattachent les uns aux autres d'une manière continue.

En d'autres termes, le segment à griffes 14 délimite des griffes 18 ayant une forme ondulée. Cette forme privilégie le fait d'attaquer les bouts unis sur une très faible surface, théoriquement ponctuelle pour chaque dent au début du serrage, tout en offrant la possibilité au fil de l'accentuation du serrage, et donc de la profondeur d'attaque de la dent dans le bout uni, de réguler les contraintes internes à la dent par une augmentation de la surface d'attaque

Les domaines de sommet 30 et les domaines de vallée 32 forment une surface frontale 34. Le profil de chaque domaine de sommet 30 est délimité par une génératrice de sommet GS. Le profil de chaque domaine de vallée 32 est délimité par une génératrice de vallée GV.

Ces génératrices de sommet GS et de vallée GV sont inclinées d'un second angle β par rapport à l'axe central X-X. Les génératrices de sommet GS et de vallée GV, et donc la surface frontale 34, sont inclinées de 90° par rapport aux surfaces extérieure 20 et intérieure 22.

En outre, le segment à griffes 14 peut comporter deux oreilles de fixation 50 adaptées pour coopérer avec des évidements de fixation 52 ménagés dans le corps de base 8.

Le segment à griffes est fabriqué de la manière suivante.

Tout d'abord, une ébauche de segment à griffes est découpée par estampage d'un flan en tôle. L'ébauche de segment a sensiblement une forme plate correspondant au déroulement du segment à griffes 14 dans un plan.

Ensuite, l'ébauche de segment est cintrée et prend la forme du segment à griffes 14.

Enfin et si nécessaire, le segment pourra faire l'objet d'un traitement thermique pour obtenir les propriétés nécessaires comme par exemple la dureté superficielle au niveau des dents ou la tenue à la corrosion.

Il est à noter que la forme du segment à griffes 14, et notamment de la surface frontale 34, peut être obtenue exclusivement par ces deux procédés estampage et cintrage sans aucune opération supplémentaire telle que du poinçonnage ou d'affûtage.

Le segment à griffes 14 selon l'invention est particulièrement facile à fabriquer, avec des outils de fragilité et d'entretien réduits, et la forme ondulée des griffes permet une bonne tenue du collier de serrage tout en diminuant les risques de blessure pour les personnes amenées à les assembler ou les utiliser.

## Revendications

1. Collier de serrage comportant
- un corps de base (8), et
- un segment à griffes (14) pour collier à griffes,
le segment à griffes (14) comprenant :
- un corps de segment (16), et
- une pluralité de griffes (18) délimitant un domaine de sommet (30) ayant un profil convexe,
le profil du ou de chaque domaine de sommet (30) étant incurvé de manière continue, et le corps de segment (16) comportant des surfaces extérieure tronconique (20) et intérieure tronconique (22), **caractérisé en ce que**
- le corps de base s'étend autour d'un axe central (X-X) sur une plage angulaire inférieure à 180°, **en ce que**
- le profil du ou de chaque domaine de sommet (30) est délimité par une génératrice de sommet (GS) qui est inclinée de 90° par rapport aux surfaces extérieure (20) et intérieure (22), **en ce que**
- le corps de segment (16) délimite un bord radialement extérieur (24) qui est délimité par une surface qui est inclinée de 90° par rapport aux surfaces extérieure (20) et intérieure (21), et **en ce que**
chaque segment à griffes (14) s'étend autour de l'axe central (X-X) autour d'une plage angulaire inférieure à la plage angulaire du corps de base (8).

2. Collier de serrage selon la revendication 1, **caractérisé en ce que** le profil du ou de chaque domaine de sommet (30) a une forme d'arc de cercle.

3. Collier de serrage selon la revendication 1, **caractérisé en ce que** le profil du ou de chaque domaine de sommet (30) a une forme sinusoïdale.

4. Collier de serrage selon l'une quelconque des revendications 1 à 3, **caractérisé en ce que** deux domaines de sommet (30) adjacents sont séparés par un domaine de vallée (32) ayant un profil concave, et **en ce que** le profil du ou de chaque domaine de vallée (30) est incurvé de manière continue.

5. Collier de serrage selon la revendication 4, **caractérisé en ce que** le profil du ou de chaque domaine de vallée (32) a une forme d'arc de cercle.

6. Collier de serrage selon la revendication 4, **caractérisé en ce que** le profil du ou de chaque domaine de vallée (32) a une forme sinusoïdale.

7. Collier de serrage selon l'une quelconque des revendications 4 à 6, **caractérisé en ce que** les profils du domaine de vallée (32) et des domaines de sommets (30) adjacents se rattachent les uns aux autres d'une manière continue.

8. Collier de serrage selon l'une quelconque des revendications précédentes, **caractérisé en ce qu'**au moins l'une des surfaces extérieure ou intérieure (20, 22) est délimitée par une génératrice (GE, GI) oblique et inclinée d'un premier angle (α) par rapport à un plan (P) perpendiculaire à un axe central, et **en ce que** la ou chaque génératrice de sommet (GS) est inclinée d'un second angle (β) par rapport à cet axe central.

9. Collier de serrage selon l'une quelconque des revendications 4 à 7 et la revendication 8 prises ensemble, **caractérisé en ce que** le profil du ou de chaque domaine de vallée (32) est défini par une génératrice (GV) qui est inclinée par rapport à l'axe central d'un angle qui est identique au second angle (β) des domaines de sommet.

## Patentansprüche

1. Rohrschelle, umfassend
- einen Grundkörper (8), und
- ein Zahnsegment (14) für eine Zahnrohrschelle,
wobei das Zahnsegment (14) umfasst:
- einen Segmentkörper (16), und
- eine Vielzahl von Zähnen (18), die einen Scheitelbereich (30) mit einem konvexen Profil begrenzen,
wobei das Profil des oder jedes Scheitelbereichs (30) kontinuierlich gekrümmt ist und der Segmentkörper (16) kegelstumpfförmige Außenflächen (20) und kegelstumpfförmige Innenflächen (22) aufweist, **dadurch gekennzeichnet, dass**
- der Grundkörper sich um eine Mittelachse (X-X) über einen Winkelbereich kleiner als 180° erstreckt, dass
- das Profil des oder jedes Scheitelbereichs (30) durch eine Scheitelerzeugende (GS) begrenzt ist, die um 90° in Bezug auf die Außenfläche (20) und die Innenfläche (22) geneigt ist, dass
- der Segmentkörper (16) einen radial außenliegenden Rand (24) begrenzt, der durch eine Fläche, die um 90° in Bezug auf die Außenfläche (20) und die Innenfläche (21) geneigt ist, begrenzt ist, und dass
jedes Zahnsegment (14) sich um die Mittelachse (X-X) über einen Winkelbereich erstreckt, der kleiner als der Winkelbereich des Grundkörpers (8) ist.

2. Rohrschelle nach Anspruch 1, **dadurch gekennzeichnet, dass** das Profil des oder jedes Scheitelbereichs (30) eine Kreisbogenform aufweist.

3. Rohrschelle nach Anspruch 1, **dadurch gekennzeichnet, dass** das Profil des oder jedes Scheitelbereichs (30) eine Sinusform aufweist.

4. Rohrschelle nach einem beliebigen der Ansprüche 1 bis 3, **dadurch gekennzeichnet, dass** zwei benachbarte Scheitelbereiche (30) durch einen Talbereich (32) getrennt sind, der ein konkaves Profil aufweist, und dass das Profil des oder jedes Talbereichs (30) kontinuierlich gekrümmt ist.

5. Rohrschelle nach Anspruch 4, **dadurch gekennzeichnet, dass** das Profil des oder jedes Talbereichs (32) eine Kreisbogenform aufweist.

6. Rohrschelle nach Anspruch 4, **dadurch gekennzeichnet, dass** das Profil des oder jedes Talbereichs (32) eine Sinusform aufweist.

7. Rohrschelle nach einem beliebigen der Ansprüche 4 bis 6, **dadurch gekennzeichnet, dass** sich die Profile des Talbereichs (32) und der benachbarten Scheitelbereiche (30) in kontinuierlicher Weise verbinden.

8. Rohrschelle nach einem beliebigen der vorhergehenden Ansprüche, **dadurch gekennzeichnet, dass** mindestens eine der Innenfläche und Außenfläche (20, 22) durch eine schräge Erzeugende (GE, GI) begrenzt ist, die um einen ersten Winkel (α) in Bezug auf eine senkrechte Ebene (P) zur Mittelachse geneigt ist, und dass die oder jede Scheitelerzeugende (GS) um einen zweiten Winkel (β) in Bezug auf diese Mittelachse geneigt ist.

9. Rohrschelle nach einem beliebigen der Ansprüche 4 bis 7 und dem Anspruch 8 zusammengenommen, **dadurch gekennzeichnet, dass** das Profil des oder jedes Talbereichs (32) durch eine Erzeugende (GV) definiert ist, die in Bezug auf die Mittelachse um einen Winkel geneigt ist, der identisch zu dem zweiten Winkel (β) der Scheitelbereiche ist.

## Claims

1. Clamping collar comprising:
- a base member (8), and
- a gripper segment (14) for gripper collar,
the gripper segment comprising:
- a segment member (16), and
- a plurality of grips (18) which delimit an apex region (30) which has a convex profile,
the profile of the or each apex region (30) being curved in a continuous manner, and the segment member (16) comprising an outer frustoconical surface (20) and an inner frustoconical surface (22), **characterised in that**
- the base member extends around a central axis (X-X) over an angular range of less than 180°, **in that**
- the profile of the or each apex region (30) is delimited by an apex generating line (GS) which is inclined through 90º relative to the outer surface (20) and inner surface (22), **in that**
- the segment member (16) delimits a radially exterior edge (24) which is delimited by a surface inclined through 90° with respect to the exterior (20) and interior (21) surfaces, and **in that**
each gripper segment (14) extends around the central axis (X-X) over an angular range smaller than the angular range of the base member (8).

2. Clamping collar according to claim 1, **characterised in that** the profile of the or each apex region (30) is in the form of an arc of a circle.

3. Clamping collar according to claim 1, **characterised in that** the profile of the or each apex region (30) is sinusoidal.

4. Clamping collar according to any one of claims 1 to 3, **characterised in that** two adjacent apex regions (30) are separated by a valley region (32) which has a concave profile, and **in that** the profile of the or each valley region (32) is curved in a continuous manner.

5. Clamping collar according to claim 4, **characterised in that** the profile of the or each valley region (32) is in the form of an arc of a circle.

6. Clamping collar according to claim 4, **characterised in that** the profile of the or each valley region (32) is sinusoidal.

7. Clamping collar according to any one of claims 4 to 6, **characterised in that** the profiles of the valley region (32) and the apex regions (30) which are adjacent are joined to each other in a continuous manner.

8. Clamping collar according to any one of the preceding claims, **characterised in that** at least one of the outer surface or inner surface is delimited by an oblique generating line (GE, GI) which is inclined through a first angle (α) relative to a plane (P) which is perpendicular relative to a centre axis, and **in that** the or each apex generating line (GS) is inclined through a second angle (ß) relative to this centre axis.

9. Clamping collar according to any one of claims 4 to 7 and claim 8 taken in combination, **characterised in that** the profile of the or each valley region (32) is defined by a generating line (GV) which is inclined relative to the centre axis through an angle which is identical to the second angle (ß) of the apex regions.
